# EUROPEAN PATENT APPLICATION

(11) **EP 4 622 351 A1**
(43) Date of publication of application: **24.09.2025**
(21) Application number: 23902490.4
(22) Date of filing: 28.11.2023
(51) Int. Cl.: H04W 52/02, H04W 52/24

(54) **POWER ADJUSTMENT METHOD AND COMMUNICATION APPARATUS**

(30) Priority: 12.12.2022 CN 202211591171
(71) Applicant: Huawei Technologies Co., Ltd., Shenzhen, Guangdong 518129 (CN)
(72) Inventor: WEI, Hailiang, Shenzhen, Guangdong 518129 (CN); WAN, Long, Shenzhen, Guangdong 518129 (CN); WANG, Yu, Shenzhen, Guangdong 518129 (CN); WANG, Baokun, Shenzhen, Guangdong 518129 (CN)
(74) Representative: Pfenning, Meinig & Partner mbB
(86) International application number: PCT/CN2023/134608
(87) International publication number: WO 2024/125292

(57) **Abstract**

This application provides a power adjustment method and a communication apparatus. The method may be applied to a communication system, such as 5G, NR, LTE, or V2X. The method includes: A second communication apparatus sends information 1 to a first communication apparatus, where the information 1 can indicate a power parameter 1; the first communication apparatus determines, based on the power parameter 1, a power 1 corresponding to a first terminal device in a first cell and a power 2 corresponding to a second terminal device in the first cell; and the first communication apparatus provides, based on the power 1, a service for the first terminal device in the first cell managed by the first communication apparatus, and provides, based on the power 2, a service for the second terminal device in the first cell managed by the first communication apparatus, where the power 1 is less than the power 2. In this way, this application can reduce a redundant power of a base station without significantly affecting an experience rate of a user.

## Description

This application claims priority to Chinese Patent Application No. 202211591171.7, filed with the China National Intellectual Property Administration on December 12, 2022 and entitled "POWER ADJUSTMENT METHOD AND COMMUNICATION APPARATUS", which is incorporated herein by reference in its entirety.

### TECHNICAL FIELD

This application relates to the field of communication technologies, and more specifically, to a power adjustment method and a communication apparatus.

### BACKGROUND

To improve a network capacity of a wireless communication system, an operator starts to deploy increasingly more base stations. However, a large quantity of base stations accordingly generate ultra-high energy consumption.

Currently, the ultra-high energy consumption generated by the base station may be reduced by reducing a redundant power of the base station, but this manner easily affects an experience rate of a user.

### SUMMARY

This application provides a power adjustment method and a communication apparatus, to reduce a redundant power of a base station without significantly affecting an experience rate of a user.

According to a first aspect, a power adjustment method is provided, where the method is applied to a first communication apparatus, the first communication apparatus manages a first cell, and the method includes: receiving first information (or first information from a second communication apparatus), where the first information can indicate a power parameter; determining a first power and a second power based on the power parameter, where the second power is greater than the first power; providing a service for a first terminal device in the first cell based on the first power; and providing a service for a second terminal device in the first cell based on the second power.

It may be understood that, the first terminal device may be one or more terminal devices. The second terminal device may be one or more terminal devices.

Optionally, the first terminal device is a center user (a terminal device located at a cell center), and the second terminal device is an edge user (a terminal device located at a cell edge). According to the method, when the second communication apparatus reduces a power of the first cell managed by the first communication apparatus, the second communication apparatus distinguishes between the center user in the first cell and the edge user in the first cell, and separately determines the first power corresponding to the center user and the second power corresponding to the edge user, where the second power is greater than the first power. The first communication apparatus determines the first power and the second power based on the power parameter indicated by the first information sent by the second communication apparatus, and separately provides services for corresponding users based on corresponding powers. When an actual power that is of the edge user and that is after the power of the cell is reduced is greater than an actual power that is of the center user and that is after the power of the cell is reduced, this can compensate for an adverse factor caused by a longer distance between the edge user and a network device. For example, when reduction is performed by a same power value, an experience rate of the edge user is more affected than that of the center user. Therefore, a power adjustment amplitude of the edge user may be reduced, to cause the power adjustment amplitude of the edge user to be less than a power adjustment amplitude of the center user. In this way, the experience rate of the edge user is not significantly affected by reduction of the power of the first cell.

For another example, the second terminal device may be a terminal device with a high capability level or a terminal device with a high delay requirement for a current service, and the first terminal device may be a terminal device with a low capability level or a terminal device with a low delay requirement for a current service. This is not limited.

It may be understood that, by distinguishing between the second terminal device (or the edge user) in the cell and the first terminal device (the center user) in the cell, in this application, an appropriate energy consumption gain can be obtained without ignoring impact of cell power adjustment on the experience rate of the second terminal device.

In conclusion, in this application, when the power of the first cell is reduced, the experience rate of the second terminal device (or the edge user) in the first cell may not be significantly affected.

In a possible implementation, the second power is less than or equal to a third power, and the third power is a power of the first cell before adjustment.

Specifically, a power reduction amplitude of the second terminal device is less than a power reduction amplitude of the first terminal device. This can further ensure that an experience rate that is of the second terminal device and that is after the power of the cell is reduced is not significantly affected. For example, when the second power is equal to the third power, the experience rate of the second terminal device is consistent with the previous experience rate. When the second power is less than the third power, there is a specific difference between the experience rate of the second terminal device and the previous experience rate. However, the difference does not significantly cause the experience rate that is of the second terminal device and that is after the power of the cell is reduced to be very low. In this way, the experience rate of the second terminal device is not significantly affected by reduction of the power of the cell.

In a possible implementation, the method further includes: determining a first experience rate of the second terminal device, where the first experience rate corresponds to the second power; and sending indication information of the first experience rate (or to the second communication apparatus).

In this way, the second communication apparatus may perform iterative update on the second power based on the first experience rate of the second terminal device at the second power, so that the first communication apparatus can obtain a higher energy consumption gain, and the experience rate of the second terminal device is not significantly affected.

In a possible implementation, the method further includes: determining a second experience rate of the first terminal device, where the second experience rate corresponds to the first power; and sending indication information of the second experience rate (or to the second communication apparatus).

In this way, the second communication apparatus may perform iterative update on the first power based on the second experience rate of the first terminal device at the first power, so that the first communication apparatus can obtain a higher energy consumption gain, and the experience rate of the first terminal device (or the center user) is not significantly affected.

In a possible implementation, the power parameter includes at least one of the following: the first power, the second power, a first power adjustment amount, or a second power adjustment amount, where a difference between the third power and the first power adjustment amount is the first power; a difference between the third power and the second power adjustment amount is the second power; and the second power adjustment amount is less than the first power adjustment amount.

According to the foregoing solution, in this application, the first communication apparatus can determine, in a plurality of ways or manners, the second power corresponding to the second terminal device and the first power corresponding to the first terminal device.

In a possible implementation, the method further includes: sending a first parameter (to the second communication apparatus), where the first parameter is used for determining the first information.

According to the foregoing solution, the second communication apparatus may determine the first information based on the first parameter sent by the first communication apparatus, to determine a power adjustment amplitude applicable to the first communication apparatus. The power adjustment amplitude does not significantly affect the experience rate of the second terminal device, and can further improve an energy consumption gain of the first cell.

In a possible implementation, the first parameter includes at least one of traffic information, load information, and channel quality indicator information.

In a possible implementation, a difference between the second power and the first power is greater than or equal to a threshold.

The threshold is set, and the threshold is a quantization of the power adjustment amplitude that does not significantly affect the experience rate of the second terminal device. In this way, in this application, a power of the second terminal device can be reduced as much as possible on a premise that the experience rate of the second terminal device is not significantly affected. This can improve the energy consumption gain of the first cell.

According to a second aspect, a power adjustment method is provided, where the method is applied to a second communication apparatus, and the method includes: generating first information, where the first information indicates a power parameter, the power parameter can be used for determining a first power and a second power, the first power corresponds to a first terminal device in a first cell, the second power corresponds to a second terminal device in the first cell, and the second power is greater than the first power; and sending the first information.

Optionally, the second communication apparatus sends the first information to a first communication apparatus, and the first communication apparatus manages the first cell.

In a possible implementation, the first terminal device may be a center user in the first cell, a terminal device with a high capability level in the first cell, or a terminal device with a high delay requirement for a current service in the first cell, and the second terminal device may be an edge user in the first cell, a terminal device with a low capability level in the first cell, or a terminal device with a low delay requirement for a current service in the first cell. This is not limited.

In a possible implementation, the second power is less than or equal to a third power, and the third power is a power of the first cell before adjustment.

In a possible implementation, the method further includes: receiving indication information of a first experience rate of the second terminal device, where the first experience rate corresponds to the second power.

In a possible implementation, the method further includes: receiving indication information of a second experience rate of the first terminal device, where the second experience rate corresponds to the first power.

In a possible implementation, the power parameter includes at least one of the following: the first power, the second power, a first power adjustment amount, or a second power adjustment amount, where a difference between the third power and the first power adjustment amount is the first power; a difference between the third power and the second power adjustment amount is the second power; and the second power adjustment amount is less than the first power adjustment amount.

In a possible implementation, the method further includes: receiving a first parameter; and determining the first information based on the first parameter and a first model, where the first model indicates a relationship between a power of the first cell and an experience rate in the first cell.

In a possible implementation, the determining the first information based on the first parameter and a first model includes: determining the first information based on the first parameter, the first model, and a second model, where the second model indicates a relationship between a power of the second terminal device and an experience rate of the second terminal device.

In a possible implementation, the first parameter includes at least one of traffic information, load information, and channel quality indicator information.

In a possible implementation, a difference between the second power and the first power is greater than or equal to a threshold.

According to a third aspect, a communication apparatus is provided. The communication apparatus may be used in the first communication apparatus in the first aspect. The communication apparatus may be a network device, an apparatus (for example, a chip, a chip system, or a circuit) in the network device, or an apparatus that can be used together with the network device.

In a possible implementation, the communication apparatus may include a one-to-one corresponding module or unit configured to perform the method/operation/step/action described in the first aspect. The module or unit may be a hardware circuit, or may be software, or may be implemented by a hardware circuit in combination with software.

In a possible implementation, the communication apparatus includes: a transceiver unit, configured to receive first information, where the first information can indicate a power parameter; a processing unit, configured to determine a first power and a second power based on the power parameter, where the second power is greater than the first power; and the processing unit is further configured to provide a service for a first terminal device in a first cell based on the first power, and the processing unit is further configured to provide a service for a second terminal device in the first cell based on the second power.

In a possible implementation, the second power is less than or equal to a third power, and the third power is a power of the first cell before adjustment.

In a possible implementation, the processing unit is further configured to: determine a first experience rate of the second terminal device, where the first experience rate corresponds to the second power; and the transceiver unit is further configured to: send indication information of the first experience rate to a second communication apparatus.

In a possible implementation, the processing unit is further configured to: determine a second experience rate of the first terminal device, where the second experience rate corresponds to the first power; and the transceiver unit is further configured to: send indication information of the second experience rate to the second communication apparatus.

In a possible implementation, the power parameter includes at least one of the following: the first power, the second power, a first power adjustment amount, or a second power adjustment amount, where a difference between the third power and the first power adjustment amount is the first power; a difference between the third power and the second power adjustment amount is the second power; and the second power adjustment amount is less than the first power adjustment amount.

In a possible implementation, the transceiver unit is further configured to: send a first parameter, where the first parameter is used for determining the first information.

In a possible implementation, the first parameter includes at least one of traffic information, load information, and channel quality indicator information.

In a possible implementation, a difference between the second power and the first power is greater than or equal to a threshold.

According to a fourth aspect, a communication apparatus is provided. The communication apparatus may be used in the first communication apparatus in the second aspect. The communication apparatus may be a network device, an apparatus (for example, a chip, a chip system, or a circuit) in the network device, or an apparatus that can be used together with the network device.

In a possible implementation, the communication apparatus may include a one-to-one corresponding module or unit to perform the method/operation/step/action described in the second aspect. The module or unit may be a hardware circuit, or may be software, or may be implemented by a hardware circuit in combination with software.

In a possible implementation, the communication apparatus includes: a processing unit, configured to generate first information, where the first information can indicate a power parameter, the power parameter is used for determining a first power and a second power, the first power corresponds to a first terminal device in a first cell, the second power corresponds to a second terminal device in the first cell, and the second power is greater than the first power; and a transceiver unit, configured to send the first information.

In a possible implementation, the second power is less than or equal to a third power, and the third power is a power of the first cell before adjustment.

In a possible implementation, the transceiver unit is further configured to: receive indication information of a first experience rate of the second terminal device, where the first experience rate corresponds to the second power.

In a possible implementation, the transceiver unit is further configured to: receive indication information of a second experience rate of the first terminal device, where the second experience rate corresponds to the first power.

In a possible implementation, the power parameter includes at least one of the following: the first power, the second power, a first power adjustment amount, or a second power adjustment amount, where a difference between the third power and the first power adjustment amount is the first power; a difference between the third power and the second power adjustment amount is the second power; and the second power adjustment amount is less than the first power adjustment amount.

In a possible implementation, the transceiver unit is further configured to: receive a first parameter; and the processing unit is further configured to: determine the first information based on the first parameter and a first model, where the first model indicates a relationship between a power of the first cell and an experience rate in the first cell.

In a possible implementation, the processing unit is further configured to: determine the first information based on the first parameter, the first model, and a second model, where the second model indicates a relationship between a power of the second terminal device and an experience rate of the second terminal device.

In a possible implementation, the first parameter includes at least one of traffic information, load information, and channel quality indicator information.

In a possible implementation, a difference between the second power and the first power is greater than or equal to a threshold.

According to a fifth aspect, a communication apparatus is provided, and includes a processor, where the processor is configured to: cause, by executing a computer program or instructions or by using a logic circuit, the communication apparatus to perform the method according to either of the first aspect and any one of possible implementations of the first aspect; or cause the communication apparatus to perform the method according to either of the second aspect and any one of possible implementations of the second aspect.

In a possible implementation, the apparatus further includes a memory, and the memory is configured to store the computer program or the instructions.

Optionally, the processor and the memory are integrated together, or the processor and the memory are separately arranged.

In another possible implementation, the memory is located outside the communication apparatus.

In a possible implementation, the communication apparatus further includes a communication interface, and the communication interface is configured to input and/or output a signal.

For example, the communication interface may be a transceiver, a circuit, a bus, a module, or another type of communication interface.

According to a sixth aspect, a communication apparatus is provided, and includes a logic circuit and an input/output interface, where the input/output interface is configured to output and/or input a signal, and the logic circuit is configured to perform the method according to either of the first aspect and any one of possible implementations of the first aspect; or perform the method according to either of the second aspect and any one of possible implementations of the second aspect.

According to a seventh aspect, a computer-readable storage medium is provided, and includes a computer program or instructions. When the computer program or the instructions are run on a computer, the computer is caused to perform the method according to either of the first aspect and any one of possible implementations of the first aspect; or the computer is caused to perform the method according to either of the second aspect and any one of possible implementations of the second aspect.

According to an eighth aspect, a computer program product is provided, and includes instructions. When the instructions are run on a computer, the computer is caused to perform the method according to either of the first aspect and any one of possible implementations of the first aspect; or the computer is caused to perform the method according to either of the second aspect and any one of possible implementations of the second aspect.

According to a ninth aspect, a communication system is provided, and includes a first communication apparatus and a second communication apparatus, where the second communication apparatus is configured to: generate first information, where the first information indicates a power parameter; the second communication apparatus sends the first information to the first communication apparatus; the first communication apparatus receives the first information from the second communication apparatus; the first communication apparatus determines a first power and a second power based on the power parameter, where the second power is greater than the first power; and the first communication apparatus provides a service for a first terminal device in a first cell based on the first power, and provides a service for a second terminal device in the first cell based on the second power.

In a possible implementation, the first communication apparatus is further configured to perform the method according to any one of possible implementations of the first aspect.

In a possible implementation, the second communication apparatus is further configured to perform the method according to any one of possible implementations of the second aspect.

For descriptions of beneficial effects of the second aspect to the ninth aspect, refer to descriptions of beneficial effects of the first aspect. Details are not described herein again.

### BRIEF DESCRIPTION OF DRAWINGS

FIG. 1 is a diagram of an application scenario 100 according to an embodiment of this application;
FIG. 2 is a schematic interaction flowchart of a power adjustment method 200 according to an embodiment of this application;
FIG. 3 is a schematic interaction flowchart of a power adjustment method 300 according to an embodiment of this application;
FIG. 4 is a schematic flowchart of energy consumption prediction 400 according to an embodiment of this application;
FIG. 5 is a schematic flowchart of experience rate prediction 500 according to an embodiment of this application;
FIG. 6 is a block diagram of a communication apparatus 600 according to an embodiment of this application;
FIG. 7 is a block diagram of a communication apparatus 700 according to an embodiment of this application;
FIG. 8 is a block diagram of a communication apparatus 800 according to an embodiment of this application; and
FIG. 9 is a block diagram of a communication apparatus 900 according to an embodiment of this application.

### DESCRIPTION OF EMBODIMENTS

The following describes technical solutions of this application with reference to accompanying drawings.

The technical solutions in embodiments of this application may be applied to various communication systems, such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system or a new radio (new radio, NR) system, a system evolved after 5G, for example, a 6th generation (6th generation, 6G) system, or a non-terrestrial network (non-terrestrial network, NTN) system such as inter-satellite communication and satellite communication. The satellite communication system includes a satellite base station and a terminal device. The satellite base station provides a communication service for the terminal device. The satellite base station may also communicate with a terrestrial base station. A satellite may be used as the base station, or may be used as the terminal device. The satellite may be a non-terrestrial base station or a non-terrestrial device such as an unmanned aerial vehicle, a hot air balloon, a low-orbit satellite, a medium-orbit satellite, or a high-orbit satellite.

The technical solutions in embodiments of this application are applicable to both a homogeneous network scenario and a heterogeneous network scenario, and have no limitation on a transmission point. The technical solutions may be coordinated multi-point transmission between macro base stations, between micro base stations, and between a macro base station and a micro base station, and are applicable to both an FDD system and a TDD system. The technical solutions in embodiments of this application are not only applicable to a low-frequency scenario (sub 6G), but also applicable to a high-frequency scenario (above 6 GHz), terahertz, optical communication, and the like. The technical solutions in embodiments of this application are not only applicable to communication between a network device and a terminal, but also applicable to communication between network devices, communication between terminals, communication in an internet of vehicles, communication in an internet of things, communication in an industrial internet, and the like.

The technical solutions in embodiments of this application may also be applied to a scenario in which the terminal is connected to a single base station. The base station connected to the terminal and a core network (core network, CN) connected to the base station are of a same standard. For example, the CN is a 5G core, the base station corresponds to a 5G base station, and the 5G base station is directly connected to the 5G core; or the CN is a 6G core, the base station is a 6G base station, and the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application are also applicable to a macro-micro scenario including different forms of base stations in a communication network. For example, the base station may be a satellite, an air balloon station, an unmanned aerial vehicle station, or the like. The technical solutions in embodiments of this application are also applicable to a scenario in which both a wide-coverage base station and a small-coverage base station exist.

The technical solutions in embodiments of this application may be applied to a scenario in which a high-reliability service requirement exists, such as a port, industrial manufacturing, transportation, or a coal mine.

It may be further understood that, the technical solutions in embodiments of this application may be further applied to 5.5G, 6G, and a wireless communication system after 6G. An application scenario includes but is not limited to terrestrial cellular communication, NTN, satellite communication, high-altitude platform station (high-altitude platform station, HAPS) communication, vehicle-to-everything (vehicle-to-everything, V2X), integrated access and backhaul (integrated access and backhaul, IAB), reconfigurable intelligent surface (reconfigurable intelligent surface, RIS) communication, and the like.

The terminal in embodiments of this application may be a device having wireless receiving and sending functions, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in embodiments of this application.

In embodiments of this application, a communication apparatus configured to implement a function of the terminal device may be a terminal device, or may be an apparatus that can support the terminal device in implementing the function, for example, a chip system. The apparatus may be installed in the terminal device or used together with the terminal device. In embodiments of this application, the chip system may include a chip, or may include the chip and another discrete component.

A network device in embodiments of this application is a device having wireless receiving and sending functions, and is configured to communicate with a terminal device. An access network device may be a node in a radio access network (radio access network, RAN), and may also be referred to as a base station, or may be referred to as a RAN node. The access network device may be an evolved NodeB (evolved NodeB, eNB, or eNodeB) in LTE, a base station in a 5G network such as a gNodeB (gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), or a cloud access network (cloud radio access network, C-RAN).

The network device in embodiments of this application may further include various forms of base stations, such as a macro base station, a micro base station (also referred to as a small cell), a relay station, a transmission reception point (transmission reception point, TRP), a transmission point (transmission point, TP), a mobile switching center, and a device that functions as a base station in device-to-device (device-to-device, D2D), vehicle-to-everything (vehicle-to-everything, V2X), and machine-to-machine (machine, M2M) communication, and a network device in an NTN communication system. This is not specifically limited in embodiments of this application.

The network device in embodiments of this application may further include a network element or a module that implements a part of functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between the DU and the RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used together with the network device. In embodiments of this application, the chip system may include a chip, or may include the chip and another discrete component.

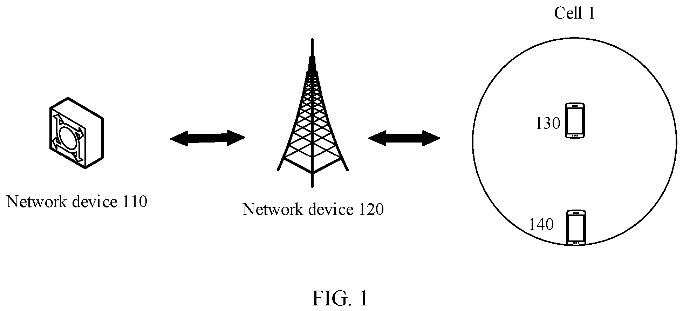

FIG. 1 is a diagram of an application scenario 100 according to an embodiment of this application. As shown in FIG. 1, the application scenario 100 includes a network device 110, a network device 120, a terminal device 130, and a terminal device 140. The network device 110 is a management device of the network device 120, and is configured to send a control instruction to the network device 120, collect and process data, train a model, perform model inference, predict energy consumption, predict an experience rate, and the like. In addition, the network device 120 manages a plurality of cells. For ease of description, FIG. 1 shows only a scenario in which the network device 120 manages a cell 1, but does not limit a scenario in which the network device 120 manages a plurality of cells.

In the application scenario 100, both the terminal device 130 and the terminal device 140 are located in a coverage are of the cell 1. Specifically, the terminal device 130 is a first terminal device in the cell 1, and the terminal device 140 is a second terminal device in the cell 1.

In this application, a second terminal device in a cell includes one or more terminal devices, and a first terminal device in the cell includes one or more terminal devices. When this is not explicitly limited, in this application, the second terminal device in the cell includes one or more terminal devices, and the first terminal device in the cell includes one or more terminal devices.

The first terminal device and the second terminal device have different features or types. For example, the first terminal device is a center user with a shorter distance to the network device 120 or located in a coverage area with good signal quality, and the second terminal device is an edge user with a longer distance to the network device 120 or located in a coverage area with poor signal quality; or the second terminal device is a terminal device with a high capability level, and the first terminal device is a terminal device with a low capability level; or a service of the second terminal device has a high delay requirement, and a service of the first terminal device has a low delay requirement; or a service volume of the second terminal device is larger, and a service volume of the first terminal device is smaller, or the like. This is not limited. For brevity of description, the following uses an example in which the first terminal device is the center user and the second terminal device is the edge user for description.

It may be understood that, for a center user (for example, the terminal device 130) in the cell 1, the network device 120 provides a more stable and high-quality communication service for the center user (because of a shorter distance); and for an edge user (for example, the terminal device 140) in the cell 1, a communication service provided by the network device 120 for the edge user may be poor (because of a longer distance), such as an unstable signal or little traffic volume. In conclusion, there are some differences between a communication service provided by the network device 120 for a center user in each cell managed by the network device 120 and a communication service provided by the network device 120 for an edge user in each cell managed by the network device 120.

As described above, to improve a network capacity of a wireless communication system, an operator starts to deploy more base stations. However, densely deployed base stations bring ultra-high energy consumption. An increase of energy consumption increases operation costs of the operator. Therefore, the industry urgently needs to reduce the ultra-high energy consumption caused by the densely deployed base stations. Currently, the energy consumption of the base station may be reduced by reducing a redundant power of the base station, but this manner affects an experience rate of a user. For example, because the distance between the edge user in the cell 1 and the network device 120 is longer, reduction performed by the network device 120 on a power of the cell 1 may result in a worse experience rate of the edge user in the cell 1, for example, a more unstable signal, poorer channel quality, and less traffic volume.

To resolve the foregoing technical problem, this application provides a power adjustment method and a communication apparatus, so that the redundant power of the base station can be reduced, and the experience rate of the edge user is not significantly affected.

The following describes the power adjustment method and the communication apparatus in embodiments of this application.

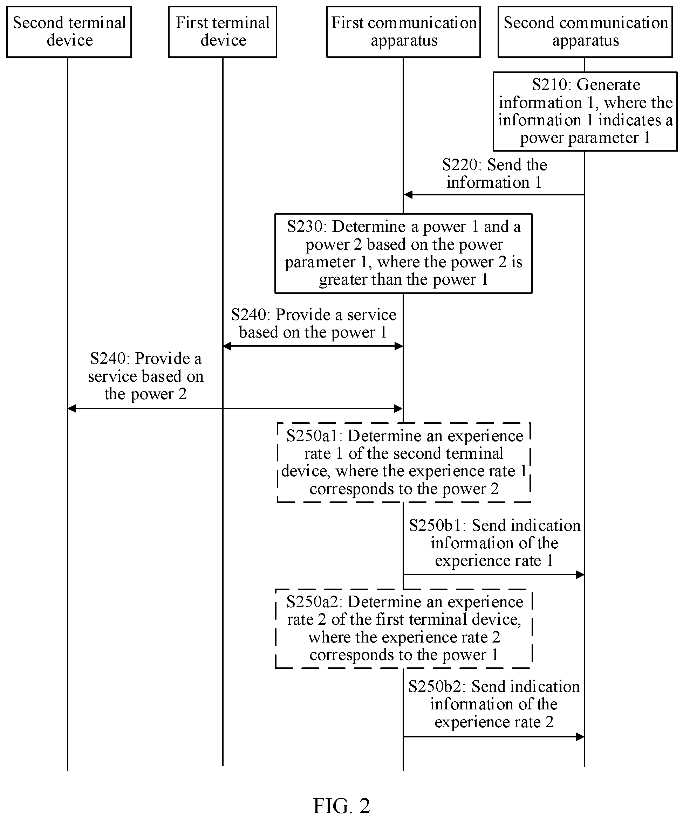

FIG. 2 is a schematic interaction flowchart of a power adjustment method 200 according to an embodiment of this application. A method procedure in FIG. 2 may be performed by a first communication apparatus and a second communication apparatus, or may be performed by a module and/or a component (for example, a chip or an integrated circuit) having a corresponding function and installed in the first communication apparatus and the second communication apparatus. This is not limited in this application. The following uses the first communication apparatus and the second communication apparatus as an example for description. As shown in FIG. 2, the method 200 includes the following steps.

S210: The second communication apparatus generates information 1 (for example, first information), where the information 1 indicates a power parameter 1, and the power parameter 1 is used for determining a power 1 (for example, a first power) of a first cell and a power 2 (for example, a second power) of the first cell.

Specifically, the power parameter 1 can be used for determining the power 1 (or a transmit power 1, which is not limited) of the first cell (where the first cell represents any cell) managed by the first communication apparatus and the power 2 (or a transmit power 2, which is not limited) of the first cell managed by the first communication apparatus, where the power 1 is less than the power 2. The power 1 corresponds to a first terminal device in the first cell, and the power 2 corresponds to a second terminal device in the first cell.

In a possible implementation, the power parameter 1 includes a power adjustment amount, and the power adjustment amount is a limitation on an adjustment amplitude of an overall power of the first cell. For example, the power adjustment amount is 3 dB, and the power adjustment amount indicates 3 dB by which the overall power of the first cell is reduced. In this case, for the first terminal device, the power 1 is equal to a difference between a power 3 and 3 dB; and for the second terminal device, the power 2 is the power 3 (for example, a third power) (which may be understood as increasing a power of the second terminal device after power adjustment, to cause the power 2 to be equal to the power 3). The power 3 is a power of the first cell before adjustment.

In a possible implementation, the power parameter 1 includes two power adjustment amounts, and the two power adjustment amounts are respectively a limitation on a power adjustment amplitude of the first terminal device in the first cell and a limitation on a power adjustment amplitude of the second terminal device in the first cell. For example, the power parameter 1 includes a power adjustment amount 1 (for example, a first power adjustment amount) and a power adjustment amount 2 (for example, a second power adjustment amount), and a difference between the power adjustment amount 1 and the power 3 is the power 1, and a difference between the power adjustment amount 2 and the power 3 is the power 2. For example, the power adjustment amount 1 is 3 dB, the power adjustment amount 2 is 0.5 dB, and the power 3 is 10 dB. Correspondingly, the power 1 is 7 dB, and the power 2 is 9.5 dB.

It may be understood that, the power adjustment amount 1 is less than the power adjustment amount 2. In this way, an experience rate of the second terminal device in the first cell may not be significantly affected.

In a possible implementation, the power parameter 1 includes the power 1. Correspondingly, the power 2 may be considered as the power 3.

In a possible implementation, the power parameter 1 includes the power 1 and the power 2.

In a possible implementation, the power parameter 1 includes an adjustment amount of the power 1. Correspondingly, an adjustment amount of the power 2 may be considered as 0.

In conclusion, in the foregoing plurality of possible implementations, the power parameter 1 can be used for determining the power 1 and the power 2. In this way, the first communication apparatus may determine, in a plurality of ways or manners, the power 2 corresponding to the second terminal device and the power 1 corresponding to the first terminal device.

S220: The second communication apparatus sends the information 1 to the first communication apparatus.

Correspondingly, the first communication apparatus receives the information 1 from the second communication apparatus.

S230: The first communication apparatus determines the power 1 and the power 2 based on the power parameter 1, where the power 2 is greater than the power 1.

Example #1: The power parameter 1 includes the power 1. Correspondingly, the power 2 is equal to the power 3 (that is, the power of the second terminal device is not adjusted). Correspondingly, the first communication apparatus determines the power 1 and the power 2 based on the power parameter 1. The power 2 is determined by default (or in an indirect manner).

Example #2: If the power parameter 1 includes the power 1 and the power 2, and the power 2 is less than or equal to the power 3, this means that both the power of the second terminal device and the power of the first terminal device need to be adjusted, but the power adjustment amplitude of the second terminal device is less than the power adjustment amplitude of the first terminal device. Correspondingly, the first communication apparatus determines the power 1 and the power 2 based on the power parameter 1. The power 2 is determined in an indication manner.

Example #3: The power parameter 1 includes the power adjustment amount 1. Correspondingly, the power adjustment amount 2 is 0, that is, the power of the second terminal device is not adjusted. Correspondingly, the first communication apparatus determines the power 1 and the power 2 based on the power parameter 1. The power 2 is determined by default (or in an indirect manner).

Example #4: If the power parameter 1 includes the power adjustment amount 1 and the power adjustment amount 2, this means that both the power of the second terminal device and the power of the first terminal device need to be adjusted, but the power adjustment amplitude of the second terminal device is less than the power adjustment amplitude of the first terminal device. Correspondingly, the first communication apparatus determines the power 1 and the power 2 based on the power parameter 1. The power 2 is determined in an indication manner.

Specifically, a power reduction amplitude of the second terminal device is less than a power reduction amplitude of the first terminal device. This can further ensure that an experience rate that is of the second terminal device and that is after the power of the cell is reduced is not significantly affected. For example, when the power 2 is equal to the power 3, the experience rate of the second terminal device is consistent with the previous experience rate. When the power 2 is less than the power 3, there is a specific difference between the experience rate of the second terminal device and the previous experience rate. However, the difference does not significantly cause the experience rate that is of the second terminal device and that is after the power of the cell is reduced to be very low. In this way, the experience rate of the second terminal device is not significantly affected by reduction of the power of the cell.

S240: The first communication apparatus provides a service for the first terminal device based on the power 1, and provides a service for the second terminal device based on the power 2.

Specifically, after determining the power 1 and the power 2 based on the power parameter 1, the first communication apparatus provides the service for the first terminal device in the first cell based on the power 1, and then provides the service for the second terminal device in the first cell based on the power 2.

In an example, a current power of the first cell is 10 dB (the power 3), and both an experience rate of the first terminal device and the experience rate of the second terminal device can satisfy preset experience rate requirements at the power (where the preset experience rate requirement of the first terminal device may be different from the preset experience rate requirement of the second terminal device). In this case, overall energy consumption of the first cell is high, and a redundant power of the first cell needs to be reduced, for example, reduced by 3 dB. For the first terminal device, because a distance between the first terminal device and the second communication apparatus is shorter, reducing the power of the first cell by 3 dB does not significantly affect the experience rate of the first terminal device (this indicates that the previous experience rate of the first terminal device is very high). However, for the second terminal device, because a distance between the second terminal device and the second communication apparatus is longer, reducing the power of the first cell by 3 dB significantly affects the experience rate of the second terminal device (this indicates that the experience rate of the second terminal device before adjustment slightly satisfies the requirement).

It may be understood that, because the distance between the second terminal device in the first cell (the cell 1) and the second communication apparatus (the network device 120) is longer than the distance between the first terminal device in the first cell (the cell 1) and the second communication apparatus (the network device 120), the power adjustment amplitude of the second terminal device is to be less than the power adjustment amplitude of the first terminal device. In this way, impact of cell power adjustment on the experience rate of the second terminal device can be reduced.

Specifically, when the second communication apparatus reduces the power of the first cell, the second communication apparatus distinguishes between the second terminal device in the first cell and the first terminal device in the first cell, and separately determines the power 1 corresponding to the first terminal device and the power 2 corresponding to the second terminal device, where the power 2 is greater than the power 1. The first communication apparatus determines the power 1 and the power 2 based on the power parameter 1 indicated by the information 1 sent by the second communication apparatus, and separately provides services for corresponding users based on corresponding powers. When an actual power that is of the second terminal device and that is after the power of the cell is reduced is greater than an actual power that is of the first terminal device and that is after the power of the cell is reduced, this can compensate for an adverse factor caused by the longer distance between the second terminal device and the network device. For example, when reduction is performed by a same power value, the experience rate of the second terminal device is more affected than that of the first terminal device. Therefore, the power adjustment amplitude of the second terminal device may be reduced, to cause the power adjustment amplitude of the second terminal device to be less than the power adjustment amplitude of the first terminal device. In this way, the experience rate of the second terminal device is not significantly affected by the reduction of the power of the first cell.

By distinguishing between the second terminal device in the cell and the first terminal device in the cell, in this application, an appropriate energy consumption gain can be obtained without ignoring the impact of the cell power adjustment on an experience rate of a user.

In conclusion, in this application, when the power of the first cell is reduced, the experience rate of the second terminal device in the first cell may not be significantly affected.

In a possible implementation, the method 200 further includes:
S250a1: The first communication apparatus determines an experience rate 1 (for example, a first experience rate) of the second terminal device, where the experience rate 1 corresponds to the power 2.

Specifically, the first communication apparatus provides the service for the second terminal device based on the power 2, and determines a specific change status of an experience rate of the second terminal device at the power 2, that is, determines the experience rate 1.

S250b1: The first communication apparatus sends indication information of the experience rate 1 to the second communication apparatus.

Correspondingly, the second communication apparatus receives the indication information of the experience rate 1 from the first communication apparatus.

Specifically, the second communication apparatus performs iterative update on the power adjustment amplitude of the second terminal device based on the experience rate 1. For example, the experience rate 1 indicates that, if the experience rate 1 of the second terminal device at the power 2 can satisfy the preset experience rate requirement, the second communication apparatus may further reduce the power 2, to obtain a higher energy consumption gain. For another example, the experience rate 1 indicates that, if the experience rate of the second terminal device at the power 2 cannot satisfy the preset experience rate requirement, the second communication apparatus may further increase the power 2, to ensure an experience rate of the second terminal device.

In this way, the second communication apparatus performs iterative update on the power 2 based on the experience rate 1 of the second terminal device at the power 2, so that the first communication apparatus can obtain the higher energy consumption gain, and the experience rate of the second terminal device is not significantly affected.

In a possible implementation, the method 200 further includes:
S250a2: The first communication apparatus determines an experience rate 2 (for example, a second experience rate) of the first terminal device, where the experience rate 2 corresponds to the power 1.

Specifically, the first communication apparatus provides a communication service for the first terminal device based on the power 1, and determines a specific change status of an experience rate of the first terminal device at the power 1, that is, determines the experience rate 2.

S250b2: The first communication apparatus sends indication information of the experience rate 2 to the second communication apparatus.

Correspondingly, the second communication apparatus receives the indication information of the experience rate 2 from the first communication apparatus.

Specifically, the second communication apparatus performs iterative update on the power adjustment amplitude of the first terminal device based on the experience rate 2. For example, the experience rate 2 indicates that, if the experience rate of the first terminal device at the power 1 can satisfy the preset experience rate requirement, the second communication apparatus may further reduce the power 1, to obtain a higher energy consumption gain. For another example, the experience rate 2 indicates that, if the experience rate 2 of the first terminal device at the power 1 cannot satisfy the preset experience rate requirement, the second communication apparatus may further increase the power 1, to ensure an experience rate of the first terminal device.

In this way, the second communication apparatus performs iterative update on the power 1 based on the experience rate 2 of the first terminal device at the power 1, so that the first communication apparatus can obtain the higher energy consumption gain, and the experience rate of the first terminal device is not significantly affected.

The following further describes the method 200 shown in FIG. 2 with reference to other accompanying drawings.

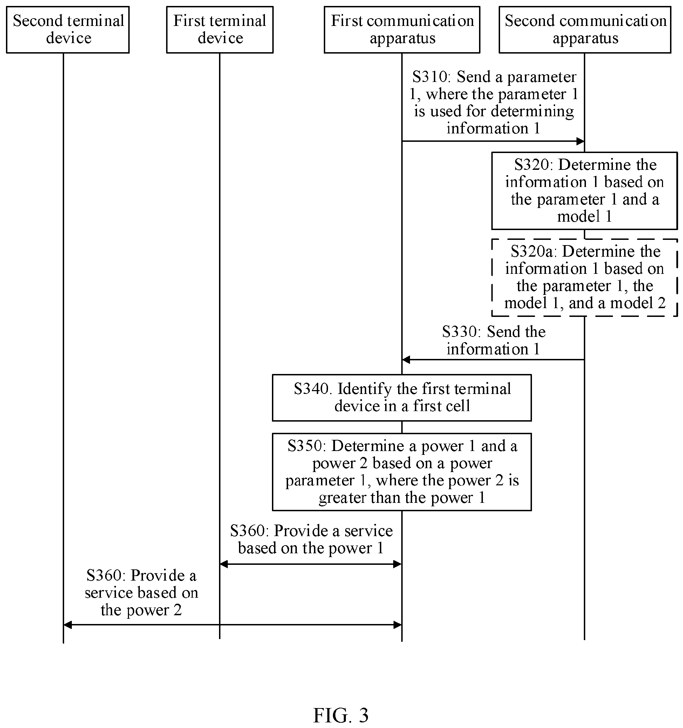

FIG. 3 is a schematic interaction flowchart of a power adjustment method 300 according to an embodiment of this application. A method procedure in FIG. 3 may be performed by a first communication apparatus and a second communication apparatus, or may be performed by a module and/or a component (for example, a chip or an integrated circuit) having a corresponding function and installed in the first communication apparatus and the second communication apparatus. This is not limited in this application. The following uses the first communication apparatus and the second communication apparatus as an example for description. As shown in FIG. 3, the method 300 includes the following steps.

S310: The first communication apparatus sends a parameter 1 (for example, a first parameter) to the second communication apparatus, where the parameter 1 is used for determining information 1.

Correspondingly, the second communication apparatus receives the parameter 1 from the first communication apparatus.

In a possible implementation, the second communication apparatus sends indication information 1 to the first communication apparatus, to indicate the first communication apparatus to send the parameter 1 to the second communication apparatus.

Specifically, the parameter 1 includes measurement report (measurement report, MR) data, performance management (performance management, PM) data (or performance indicator data for measuring a network service), and data 1. The data 1 includes a reference signal (reference signal, RS) power (or pilot power), a traffic channel power (for example, a PA/PB power), a frequency, bandwidth, and the like. A power of a first cell may include one or both of the RS power and the PA/PB power.

In an example, the MR data includes data of an intra-frequency measurement event (UE-level data). Optionally, the first communication apparatus sends at least 2000 pieces of MR data of the first cell to the second communication apparatus. Correspondingly, the second communication apparatus performs modeling on a relationship between an experience rate in the first cell and the power of the first cell based on the PM data and the data 1.

In step S310, that the first communication apparatus sends the parameter 1 to the second communication apparatus may be a process in which the second communication apparatus collects data of the first cell.

In a possible implementation, the parameter 1 may include one or more of traffic information, load information, a channel quality indicator (channel quality indicator, CQI), signal measurement strength, an edge user proportion, intra-frequency inter-frequency handover, or interference measurement information. Each of the foregoing items may be used by the second communication apparatus to determine the information 1.

S320: The second communication apparatus determines the information 1 based on the parameter 1 and a model 1 (for example, a first model).

Specifically, the second communication apparatus uses the parameter 1 as an input of the model 1, and performs training and inference on the model 1, to obtain the information 1 (where the information 1 may be an output of the model 1). The model 1 represents the relationship between the experience rate in the first cell and the power of the first cell. The model in this application may be an artificial intelligence model (for example, a machine learning model such as a neural network) or an algorithm model. This is not limited. There are examples.

Example #a: The model 1 represents a relationship between the experience rate in the first cell and the RS power of the first cell. Specifically, the input of the model 1 is a change value (for example, a power adjustment amount 1) of the RS power, a CQI, a quantity of users, a traffic volume, physical resource block (physical resource block, PRB) utilization, a good coverage rate of a reference signal received power (reference signal received power, RSRP), and an initial RS power (for example, a power 3) that are before RS power adjustment; and the output of the model 1 is an experience rate after the RS power adjustment (for example, an experience rate 2).

It should be understood that, for Example #a, the experience rate after the RS power adjustment is at a cell level, that is, at a first terminal device level. The second communication apparatus predicts, based on the experience rate after the RS power adjustment, an experience rate of a second terminal device after power adjustment, and determines a corresponding power adjustment amount 2.

Example #b: The model 1 represents a relationship between the experience rate in the first cell and the PA/PB power of the first cell. Specifically, the input of the model 1 is a change amount (for example, a power adjustment amount 1) of the PA/PB power, PRB utilization, a tracking area (tracking area, TA) value, a CQI, and an initial PA/PB power (for example, a power 3) that are before PA/PB power adjustment; and the output of the model 1 is an experience rate after the PA/PB power adjustment (for example, an experience rate 2).

It should be understood that, for Example #b, the experience rate after the PA/PB power adjustment is at a cell level, that is, at a first terminal device level. The second communication apparatus predicts, based on the experience rate after the PA/PB power adjustment, an experience rate of a second terminal device after power adjustment, and determines a corresponding power adjustment amount 2.

The CQI, the quantity of users, the traffic volume, the PRB utilization, and the good coverage rate of the RSRP that are listed above are all parameters related to the experience rate. In other words, the experience rate is an upper or comprehensive expression of the parameters such as the CQI, the quantity of users, the traffic volume, the PRB utilization, and the good coverage rate of the RSRP.

In step S320, the second communication apparatus predicts the experience rate of the cell obtained through the power adjustment, and obtains the power adjustment amount 1. Further, the second communication apparatus determines the power adjustment amount 2 based on a correlation between a historical experience rate of the second terminal device and a power of the second terminal device (where data used for determining the correlation is reported by the first communication apparatus).

Optionally, the second communication apparatus determines that the power of the second terminal device remains unchanged, and only a power of a center user is adjusted.

Optionally, the second communication apparatus determines the power adjustment amount 2 based on a model 2. The model 2 represents a relationship between the experience rate of the second terminal device and the power of the second terminal device. For details, refer to the following descriptions. Details are not described herein.

In a possible implementation, the method 300 further includes:
S320a: The second communication apparatus determines the information 1 based on the parameter 1, the model 1, and the model 2 (for example, a second model).

Specifically, the model 2 indicates the relationship between the experience rate of the second terminal device and the power of the second terminal device. The second communication apparatus determines the power adjustment amount 2 based on the model 2.

In an example, the power of the first cell is the RS power, and the second communication apparatus determines, based on the PM data in the parameter 1, a quantity of PRBs corresponding to a modulation and coding scheme (modulation and coding scheme, MCS) of the second terminal device and a quantity of PRBs corresponding to an MCS of the first terminal device. The quantity of PRBs occupied by the second terminal device is represented as X_quadrature phase shift keying (quadrature phase shift keying, QPSK) (where X_QPSK is a total quantity of PRBs corresponding to MCSs 0 to 9 and 29). The quantity of PRBs of the first terminal device is represented as X_non-QPSK. The second communication apparatus identifies the second terminal device and the first terminal device based on a rank (rank, RANK) of a physical downlink shared channel (physical downlink shared channel, PDSCH). For example, the second terminal device corresponds to RANK1, and the first terminal device corresponds to another RANK.

Correspondingly, Power adjustment amount 2 = (X_QPSK - (X_out - X_out_non-QPSK) + (X_in - X_in_non-QPSK))/(X_QPSK + X_non-QPSK - X_out + X_in). Specifically, X_in and X_out are easily affected by the power adjustment amount, and both two values X_out and X_in may relate to the second terminal device and the first terminal device. Therefore, in this application, it is assumed that a proportion of second terminal devices of X_out is the same as a proportion of second terminal devices of X_in, that is, X_out_non-QPSK = X_in_non-QPSK.

Optionally, it can be further defined in this application that X_delta = X_out - X_in, and Power adjustment amount 2 = (X_QPSK - X_delta)/(X_QPSK + X_non-QPSK - X_delta). X_QPSK + X_non-QPSK = Average quantity of used PRBs of a downlink PDSCH data radio bearer (data radio bearer, DRB), and X_QPSK = (Total quantity of PRBs with RANK1 during PDSCH scheduling that correspond to MCSs 0 to 9 and 29)/(1000 × 3600). A time unit of 1000 is millisecond, and a time unit of 3600 is second. Therefore, 1000 × 3600 refers to a quantity of PRBs in an hour.

In an example, the power of the first cell is the PA/PB power, and Power adjustment amount 2 = (Total quantity of PRBs with RANK1 during PDSCH scheduling that correspond to MCSs 0 to 9 and 29)/(Average quantity of used PRBs of the downlink PDSCH DRB × 1000 × 3600). Correspondingly, the second communication apparatus predicts an experience rate of the second terminal device at the power adjustment amount 2, and a predicted experience rate of the second terminal device after power compensation is expressed as: After_throughput (throughput, THRP)_Considering compensation = After_THRP + (Before_THRP - After_THRP) × Edge user proportion. In this application, the experience rate can be represented by the throughput.

In a possible implementation, the second communication apparatus determines, via an optimization algorithm, a power parameter 1 that satisfies a constraint of the experience rate and the coverage rate. The second communication apparatus may send the power parameter 1 to the first communication apparatus via a script command. Correspondingly, the first communication apparatus may perform a change operation of the power parameter 1, for example, flexibly adjust a power adjustment amplitude of the second terminal device. The first communication apparatus may determine a power 2 based on a real-time change of the experience rate of the second terminal device.

In a possible implementation, after completing prediction of the experience rate of the second terminal device obtained through the power adjustment, the second communication apparatus determines, based on a construction result of a cell group (namely, a cell group formed by cells whose powers need to be reduced), the cells on which power adjustment needs to be performed and power adjustment amounts corresponding to the cells.

In an example, when the RS power of the cell is adjusted, the second communication apparatus needs to obtain a maximum energy consumption gain on a premise that the coverage rate does not decrease and the experience rate does not decrease or satisfies a preset experience rate requirement (for example, a preset experience rate threshold).

In an example, when the PA/PB power of the cell is adjusted, the second communication apparatus needs to obtain a maximum energy consumption gain on a premise that the experience rate of the cell does not decrease or satisfies a preset experience rate requirement (for example, a preset experience rate threshold). The second communication apparatus predicts the experience rate of the second terminal device obtained through the power adjustment. Under a same experience rate threshold, the first communication apparatus can reduce more power of the second terminal device. This is because the power adjustment amount 2 indicated by the second communication apparatus is a conservative value, and therefore, the first communication apparatus may flexibly adjust the power 2 based on a specific case.

In a possible implementation, the first communication apparatus may flexibly determine a power compensation value of the second terminal device. For example, the first communication apparatus determines the power compensation value based on a modulation order of the second terminal device. For example, a larger modulation order indicates a larger power compensation value. Optionally, the first communication apparatus may alternatively determine the power compensation value of the second terminal device based on another parameter, for example, signal measurement strength, an interference proportion, an edge RANK proportion, and an edge user distribution proportion.

S330: The second communication apparatus sends the information 1 to the first communication apparatus.

Correspondingly, the first communication apparatus receives the information 1 from the second communication apparatus.

For specific descriptions of S330, refer to descriptions of S210. Details are not described herein again.

S340: The first communication apparatus identifies the second terminal device in the first cell.

For example, the first communication apparatus determines that all QPSK users with RANK1 (or a non-reported RANK value) during PDSCH scheduling are second terminal devices.

S350: The first communication apparatus determines a power 1 and the power 2 based on the power parameter 1.

For specific descriptions of S350, refer to descriptions of S230. Details are not described herein again.

S360: The first communication apparatus provides a service for the first terminal device in the first cell based on the power 1, and provides a service for the second terminal device in the first cell based on the power 2.

For specific descriptions of S360, refer to descriptions of S240. Details are not described herein again.

By distinguishing between the second terminal device in the cell and the first terminal device in the cell, in this application, an appropriate energy consumption gain can be obtained without ignoring impact of cell power adjustment on the experience rate of the second terminal device.

In conclusion, in this application, when the power of the first cell is reduced, the experience rate of the second terminal device in the first cell may not be significantly affected.

It should be noted that, the model 1 and the model 2 are not specifically limited in this application, provided that an impact relationship between the experience rate and the power can be established.

The following further describes the method 200 with reference to other accompanying drawings.

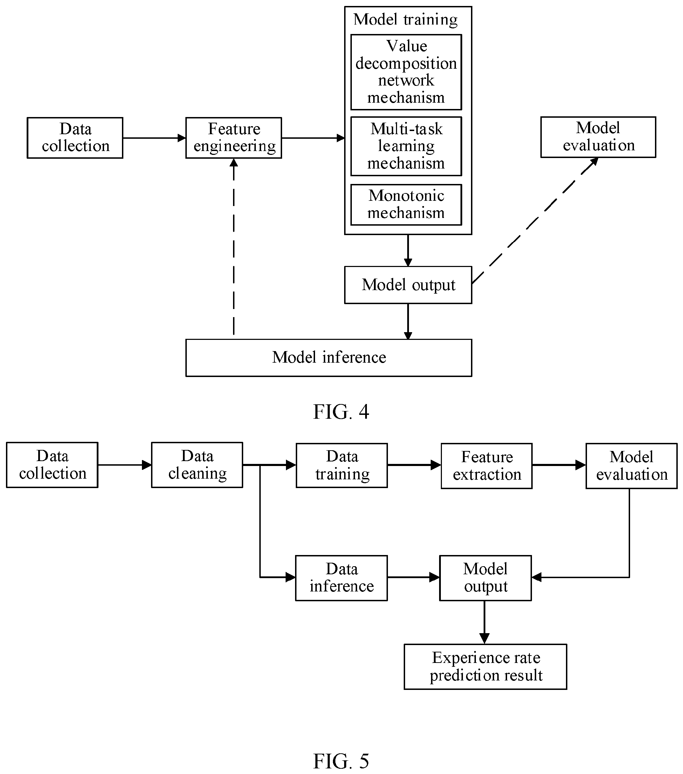

FIG. 4 is a schematic flowchart of energy consumption prediction 400 according to an embodiment of this application. As shown in FIG. 4, a procedure of the energy consumption prediction 400 includes the following phases: data collection, a feature process, model training, model output, and model inference. Details are as follows:
Data collection: A second communication apparatus obtains data such as all RRU models, user level strength, hourly PRB utilization, a traffic volume, a quantity of activated users, a power configuration value, a quantity of antennas, and a quantity of send ports that correspond to a first cell.

Feature engineering: The second communication apparatus collects statistics on hardware models of all RRUs corresponding to the first cell, encodes the hardware models, obtains base stations corresponding to all the RRUs, and then encodes each of the base stations. For example, a number of a base station is 2, there are four base stations in total, and vectors of the base stations are [0, 1, 0, 0], that is, except that a 2^{nd} element is 1, all other elements are 0.

The second communication apparatus may perform normalization processing on each key feature (for example, a quantity of PRBs, traffic, and a quantity of activated users), and store a normalizer obtained through the normalization processing, that is, store a maximum value of each key feature. When performing the model inference, the second communication apparatus can perform data inference by using the maximum value of each key feature, and obtain a final output, that is, obtain energy consumption of the first cell. The energy consumption of the first cell affects determining of a power 1 and a power 2.

Model training: In this application, construction of an additive neural network is supported. An activation function in the additive neural network is a ReLU function. For descriptions of the ReLU function, refer to existing descriptions. Details are not described herein.

Specifically, data with the key feature may be divided into a training set data and a test set data based on a ratio of 9:1. The training set data is used for training a model, and the test set data is used for measuring a generalization capability of the model. That is, the test set data is used for avoiding an overfitting phenomenon: Prediction of the model on the training set data is accurate, but actual application performance of the model on the test set data is poor.

Optionally, in this application, an input (for example, a quantity of used PRBs, an average quantity of activated users, downlink traffic, and base station encoding) for data training can be provided, a predicted value of RRU energy consumption is obtained through forward update, and a minimum mean square error is used as a loss function for reverse update: Loss = (Predicted value of the RRU energy consumption - Real value of the RRU energy consumption)². In this application, a parameter gradient of the key feature can be determined according to the loss function.

Optionally, in this application, an optimizer can be defined, and the reverse update is performed. During the reverse update, non-negative truncation may be performed on the key feature (to be specific, a gradient descent convergence manner is used only when a derivative is a negative number, and during the update, if the derivative is a non-negative number, update for the gradient is stopped). After the model training ends, a model obtained through the model training is output and saved. The model obtained through the model training may be one or both of a model 1 and a model 2.

In a possible implementation, the model training includes a value decomposition network mechanism, a multi-task learning mechanism, and a monotonic rule mechanism. Details are as follows:

Value decomposition network mechanism: One RRU may correspond to a plurality of cells, the foregoing additive neural network can output energy consumption of each of the cells, and perform an addition operation on energy consumption output of each of the cells, to obtain energy consumption of the RRU. In this way, when only data of the energy consumption of the RRU is available, the energy consumption of the cell may be reversely deduced through training.

Multi-task learning mechanism: Each RRU type corresponds to one additive neural network. In this way, multi-task learning may be performed via the multi-task learning mechanism and by using an identifier of the RRU as a task identifier, to improve work efficiency.

Monotonic rule mechanism: A neural network weight is specified to be non-negative. In this way, monotonicity between predicted energy consumption of a cell and a load of the cell can be ensured.

It should be understood that, content shown in FIG. 4 is an example description of outputting information 1 by the second communication apparatus by performing training and inference based on a parameter 1 and the model 1. A final output of the energy consumption prediction 400 is the information 1, that is, based on the procedure of the energy consumption prediction 400, the power 2 and the power 1 can be determined in this application. In addition, the determined power 2 does not significantly affect an experience rate of a second terminal device, and an energy consumption gain of the first cell can be further improved.

Optionally, in this application, iterative update and training of the model obtained through the model training (where this may be implemented through model evaluation) are supported.

It should be noted that, for detailed descriptions of some content related to the model training, the model evaluation, the model inference, and the like, refer to a conventional technology. This is not described too much in this application.

FIG. 5 is a schematic flowchart of experience rate prediction 500 according to an embodiment of this application. As shown in FIG. 5, a procedure of the experience rate prediction 500 includes: data collection, data cleaning, model training, model inference, feature extraction, model output, model evaluation, and an experience rate prediction result. Details are as follows:
Data collection: A second communication apparatus obtains data such as hourly PRB utilization, a traffic volume, a quantity of activated users, user level strength, a CQI, a timing advance (timing advance, TA), interference proportion information, a low RANK proportion, uplink and downlink traffic volumes, an edge user proportion, a small packet proportion, physical random access channel (PRACH) utilization, control channel element (control channel element, CCE) utilization of a serving cell, an MCS of the serving cell, and system bandwidth that are of a first cell.

Data cleaning: After obtaining key performance indicators (key performance indicator, KPI) (for example, the hourly PRB utilization, the traffic volume, and the quantity of activated users), the second communication apparatus performs data filtering. This specifically includes the following steps.

Abnormal data filtering: Data in which Cell throughput THRP per hour > 10 or Quantity of used downlink PRBs per hour > 5 is defined as normal data, and the rest is defined as abnormal data.

Data deduplication: For a plurality of key features of a same type, if all features in the plurality of key features are completely consistent, any piece of valid data is retained, that is, only one key feature is used.

Data record filtering: Set a data amount threshold, and only a cell whose data amount is greater than the data amount threshold is processed.

Data training: The second communication apparatus performs the model training on data obtained by completing the data cleaning.

Feature extraction: The second communication apparatus performs feature construction on the key feature.

Model evaluation: The model evaluation is used for evaluating a model obtained through the data training, and outputting a model that satisfies a precision requirement.

In a possible implementation, in this application, the data training can be performed by using a GradientBoostingRegressor algorithm, and the model evaluation is performed in a cross-validation cross_validate manner.

Data inference: Obtain key feature data of the first cell (for example, the hourly PRB utilization, the traffic volume, and the quantity of activated users).

Model output: Output a model obtained through data inference and model evaluation.

Experience rate prediction result: Based on the foregoing model, the second communication apparatus predicts an experience rate of a second terminal device after power compensation, and obtains the experience rate prediction result.

Correspondingly, the second communication apparatus determines a power adjustment amount 2.

It should be understood that, content shown in FIG. 5 is still another example description of outputting information 1 by the second communication apparatus by performing training and inference based on a parameter 1 and a model 1. A final output of the experience rate prediction 500 may be the information 1, that is, based on the procedure of the experience rate prediction 500, a power 2 and a power 1 can be determined in this application. In addition, the determined power 2 does not significantly affect the experience rate of the second terminal device, and an energy consumption gain of the first cell can be further improved.

It should be noted that, for detailed descriptions of some content related to the data training, the model evaluation, the data inference, and the like, refer to a conventional technology. This is not described too much in this application.

The foregoing describes the method embodiments of this application, and the following describes embodiments of corresponding communication apparatuses.

To implement functions in the methods provided in this application, a terminal and a network device may each include a hardware structure and/or a software module, to implement the functions in a form of the hardware structure, the software module, or the hardware structure plus the software module. Whether a specific function in the functions is performed by using the hardware structure, the software module, or the hardware structure plus the software module depends on particular applications and design constraints of the technical solutions.

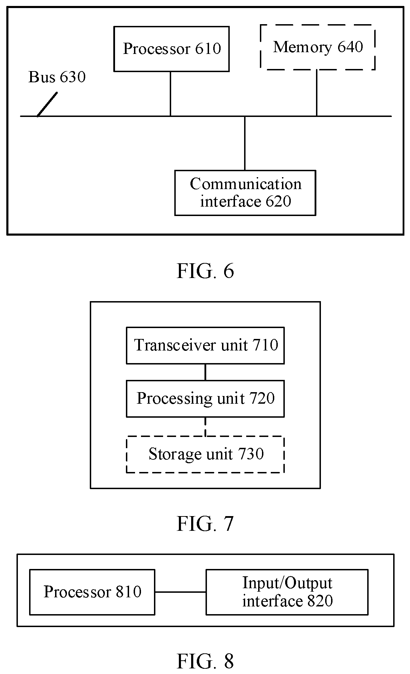

FIG. 6 is a block diagram of a communication apparatus 600 according to an embodiment of this application. The communication apparatus 600 includes a processor 610 and a communication interface 620. The processor 610 and the communication interface 620 may be connected to each other through a bus 630. The communication apparatus 600 shown in FIG. 6 may be a first communication apparatus, a second communication apparatus, or a terminal device.

Optionally, the communication apparatus 600 further includes a memory 640.

The memory 640 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 640 is configured to store related instructions and data.

The processor 610 may be one or more central processing units (central processing unit, CPU). When the processor 610 is one CPU, the CPU may be a single-core CPU, or may be a multi-core CPU.

When the communication apparatus 600 is the first communication apparatus, for example, the processor 610 is configured to perform the following operations: receiving information 1, where the information 1 can indicate a power parameter 1; determining a power 1 and a power 2 based on the power parameter 1, where the power 2 is greater than the power 1; and providing a service for a first terminal device in a first cell based on the power 1, and providing a service for a second terminal device in the first cell based on the power 2.

For another example, the processor 610 may perform the following operations: determining a first experience rate of the second terminal device, where the first experience rate corresponds to the power 2; and sending indication information of the first experience rate to the second communication apparatus.

For another example, the processor 610 may perform the following operations: determining a second experience rate of the first terminal device, where the second experience rate corresponds to the power 1; and sending indication information of the second experience rate to the second communication apparatus.

The foregoing content is merely used as an example for description. When the communication apparatus 600 is the first communication apparatus, the communication apparatus 600 is responsible for performing the method or steps related to the first communication apparatus in the foregoing method embodiments.

When the communication apparatus 600 is the second communication apparatus, for example, the processor 610 is configured to perform the following operations: generating information 1, where the information 1 indicates a power parameter 1, the power parameter 1 is used for determining a power 1 and a power 2, the power 2 is greater than the power 1, the power 1 corresponds to a first terminal device in a first cell, and the power 2 corresponds to a second terminal device in the first cell; and sending the information 1 to the first communication apparatus.

For another example, the processor 610 may perform the following operation: receiving indication information of an experience rate 1 of the second terminal device, where the experience rate 1 corresponds to the power 2.

For another example, the processor 610 may perform the following operation: receiving an experience rate 2 of the first terminal device, where the experience rate 2 corresponds to the power 1.

The foregoing content is merely used as an example for description. When the communication apparatus 600 is the second communication apparatus, the communication apparatus 600 is responsible for performing the method or steps related to the second communication apparatus in the foregoing method embodiments.

The foregoing descriptions are merely an example for description. For specific content, refer to content shown in the foregoing method embodiments. In addition, for implementation of operations in FIG. 6, refer to corresponding descriptions in the method embodiments shown in FIG. 2 to FIG. 5.

FIG. 7 is a block diagram of a communication apparatus 700 according to an embodiment of this application. The communication apparatus 700 may be the first communication apparatus or the second communication apparatus in the foregoing embodiments, or may be a chip or a module in the first communication apparatus or the second communication apparatus, and is configured to implement the methods in the foregoing embodiments. The communication apparatus 700 includes a transceiver unit 710 and a processing unit 720. The following describes the transceiver unit 710 and the processing unit 720 as an example.

The transceiver unit 710 may include a sending unit and a receiving unit that are respectively configured to implement a sending function or a receiving function in the foregoing method embodiments. The transceiver unit 710 may further include a processing unit configured to implement a function other than the sending function or the receiving function.

When the communication apparatus 700 is the first communication apparatus, for example, the transceiver unit 710 is configured to: receive information 1, where the information 1 indicates a power parameter 1; the processing unit 720 is configured to: determine a power 1 and a power 2 based on the power parameter 1; and the processing unit 720 is configured to: provide a service for a first terminal device in a first cell based on the power 1, and provide a service for a second terminal device in the first cell based on the power 2.

Optionally, the processing unit 720 may be further configured to perform content related to steps such as processing and coordination of the first communication apparatus.

Optionally, the communication apparatus 700 further includes a storage unit 730, and the storage unit 730 is configured to store a program or code used for performing the foregoing method.

The foregoing content is merely used as an example for description. When the communication apparatus 700 is the first communication apparatus, the communication apparatus 700 is responsible for performing the method or steps related to the first communication apparatus in the foregoing method embodiments.

When the communication apparatus 700 is the second communication apparatus, for example, the processing unit 720 is configured to: generate information 1, where the information 1 can indicate a power parameter 1; and the transceiver unit 710 is configured to: send the information 1 to the first communication apparatus.

Optionally, the processing unit 720 may be further configured to perform content related to steps such as processing and coordination of the second communication apparatus.

Optionally, the communication apparatus 700 further includes a storage unit 730, and the storage unit 730 is configured to store a program or code used for performing the foregoing method.

The foregoing content is merely used as an example for description. When the communication apparatus 700 is the second communication apparatus, the communication apparatus 700 is responsible for performing the method or steps related to the second communication apparatus in the foregoing method embodiments.

In addition, for implementation of operations in FIG. 7, refer to corresponding descriptions of the method shown in the foregoing embodiments. Details are not described herein again.

The apparatus embodiments shown in FIG. 6 and FIG. 7 are used for implementing content described in FIG. 2 to FIG. 5 in the foregoing method embodiments. Therefore, for specific execution steps and methods of the apparatuses shown in FIG. 6 and FIG. 7, refer to content described in the foregoing method embodiments.

It should be understood that, the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. Unified descriptions are provided herein, and details are not described below again.

FIG. 8 is a diagram of a communication apparatus 800 according to an embodiment of this application. The communication apparatus 800 may be configured to implement a function of the first communication apparatus in the foregoing methods or a function of the second communication apparatus in the foregoing methods. The communication apparatus 800 may be a chip in the first communication apparatus or the second communication apparatus.

The communication apparatus 800 includes an input/output interface 820 and a processor 810. The input/output interface 820 may be an input/output circuit. The processor 810 may be a signal processor, a chip, or another integrated circuit that can implement the methods in this application. The input/output interface 820 is configured to input or output a signal or data.

For example, when the communication apparatus 800 is the first communication apparatus, the input/output interface 820 is configured to: receive information 1 from the second communication apparatus, where the information 1 can indicate a power parameter 1; the processor 810 is configured to: determine a power 1 and a power 2 based on the power parameter 1, where the power 2 is greater than the power 1; and the processor 810 is further configured to: provide a service for a first terminal device in a first cell based on the power 1, and the processor 810 is further configured to: provide a service for a second terminal device in the first cell based on the power 2. The processor 810 is further configured to perform a part or all of steps of any method provided in this application.

For example, when the communication apparatus 800 is the second communication apparatus, the input/output interface 820 is configured to: send information 1 to the first communication apparatus, where the information 1 can indicate a power parameter 1; and the processor 810 is configured to: generate the information 1. The processor 810 is further configured to perform a part or all of steps of any method provided in this application.

In a possible implementation, the processor 810 executes instructions stored in a memory, to implement a function implemented by a network device or a terminal device.

Optionally, the communication apparatus 800 further includes a memory.

Optionally, the processor and the memory are integrated together.

Optionally, the memory is outside the communication apparatus 800.

In a possible implementation, the processor 810 may be a logic circuit, and the processor 810 inputs/outputs a message or signaling through the input/output interface 820. The logic circuit may be a signal processor, a chip, or another integrated circuit that can implement the methods in embodiments of this application.

The foregoing descriptions of the apparatus in FIG. 8 are merely an example. The apparatus can be configured to perform the methods in the foregoing embodiments. For specific content, refer to descriptions in the foregoing method embodiments. Details are not described herein again.

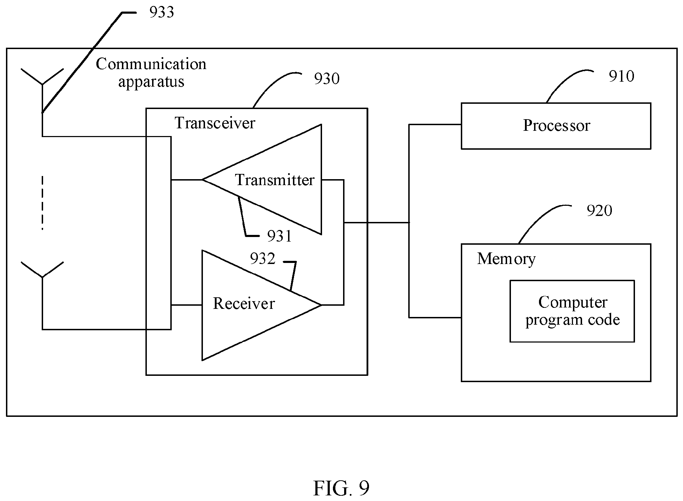

FIG. 9 is a block diagram of a communication apparatus 900 according to an embodiment of this application. The communication apparatus 900 may be a network device or a chip. The communication apparatus 900 may be configured to perform operations performed by the network device (for example, both a first communication apparatus and a second communication apparatus are network devices) in the method embodiments shown in FIG. 2 to FIG. 5.

When the communication apparatus 900 is a network device, for example, a base station. FIG. 9 is a simplified diagram of a structure of a base station. The base station includes a part 910, a part 920, and a part 930. The part 910 is mainly configured to: perform baseband processing, control the base station, and the like. The part 910 is usually a control center of the base station, may be usually referred to as a processor, and is configured to control the base station to perform a processing operation on a side of the network device in the foregoing method embodiments. The part 920 is mainly configured to store computer program code and data. The part 930 is mainly configured to receive and send a radio frequency signal, and perform conversion between the radio frequency signal and a baseband signal. The part 930 may be usually referred to as a transceiver module, a transceiver machine, a transceiver circuit, a transceiver, or the like. A transceiver module in the part 930 may also be referred to as a transceiver machine, a transceiver, or the like. The transceiver module includes an antenna 933 and a radio frequency circuit (not shown in FIG. 9). The radio frequency circuit is mainly configured to perform radio frequency processing. Optionally, a component that is configured to implement a receiving function and that is in the part 930 may be considered as a receiver, and a component that is configured to implement a sending function and that is in the part 930 may be considered as a transmitter. In other words, the part 930 includes a receiver 932 and a transmitter 931. The receiver may also be referred to as a receiving module, a receiver machine, a receiver circuit, or the like, and the transmitter may be referred to as a transmitting module, a transmitter machine, a transmitter circuit, or the like.

The part 910 and the part 920 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, one or more processors may alternatively be shared by the plurality of boards, or one or more memories may be shared by the plurality of boards, or one or more processors may be simultaneously shared by the plurality of boards.

For example, in an implementation, the transceiver module in the part 930 is configured to perform a receiving and sending-related process performed by the network device in embodiments shown in FIG. 2 to FIG. 5. The processor in the part 910 is configured to perform a processing-related process performed by the network device in embodiments shown in FIG. 2 to FIG. 5.

In another implementation, the processor in the part 910 is configured to perform a processing-related process performed by a communication device in embodiments shown in FIG. 2 to FIG. 5.

In another implementation, the transceiver module in the part 930 is configured to perform a receiving and sending-related process performed by a communication device in embodiments shown in FIG. 2 to FIG. 5.

It should be understood that, FIG. 9 is merely an example rather than a limitation, and the foregoing network device including the processor, the memory, and the transceiver may not depend on structures shown in FIG. 6 to FIG. 8.

When the communication apparatus 900 is the chip, the chip includes a transceiver, a memory, and a processor. The transceiver may be an input/output circuit or a communication interface. The processor is a processor, a microprocessor, or an integrated circuit integrated on the chip. A sending operation of the network device in the foregoing method embodiments may be understood as an output of the chip, and a receiving operation of the network device in the foregoing method embodiments may be understood as an input of the chip.

This application further provides a chip, including a processor. The processor is configured to invoke, from a memory, instructions stored in the memory and run the instructions, to cause a communication device on which the chip is installed to perform the methods in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the methods in the foregoing examples. Optionally, the chip further includes a memory, and the memory is configured to store a computer program or code.

This application further provides a processor. The processor is configured to be coupled to a memory, and configured to perform a method and a function that are related to a network device or a terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

In descriptions of embodiments of this application, unless otherwise specified, "a plurality of" means two or more. "At least one item (piece) of the following" or a similar expression thereof means any combination of these items, including a singular item (piece) or any combination of a plurality of items (pieces). For example, at least one item (piece) of a, b, or c may indicate: a, b, c, a-b, a-c, b-c, or a-b-c, where a, b, and c may be singular or may be plural.

In addition, to clearly describe the technical solutions in embodiments of this application, words such as "first" and "second" are used in embodiments of this application to distinguish same items or similar items that have basically same functions and roles. A person skilled in the art may understand that, the words such as "first" and "second" do not limit a quantity or an execution sequence, and the words such as "first" and "second" do not limit a specific difference. In addition, in embodiments of this application, words such as "example" and "for example" are used for representing an example, an illustration, or a description.

Any embodiment or design solution described as an "example" or "for example" in embodiments of this application should not be construed as being more preferred or having more advantages than another embodiment or design solution. Rather, the words such as "example" and "for example" are used for presenting a relevant concept in a specific manner for ease of understanding.

In descriptions of embodiments of this application, unless otherwise specified, "/" indicates that associated objects are in an "or" relationship. For example, A/B may indicate A or B. "And/or" in this application merely describes an association relationship between the associated objects, and indicates that three relationships may exist. For example, A and/or B may indicate the following cases: Only A exists, both A and B exist, and only B exists, where A and B may be singular or plural.

In embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that, in combination with examples described in embodiments disclosed in this specification, units and algorithm steps can be implemented by electronic hardware or a combination of computer software and electronic hardware. Whether the functions are performed in a hardware or software manner depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatuses, and units, refer to a corresponding process in the foregoing method embodiments. Details are not described herein again.

In a plurality of embodiments provided in this application, it should be understood that, the disclosed system, apparatuses, and methods may be implemented in other manners. For example, the apparatus embodiments described above are merely an example. For example, division of the units is merely logical function division. In an actual implementation, there may be another division manner. For example, a plurality of units or components may be combined or integrated into another system, or some features may be ignored or not performed.

In addition, displayed or discussed mutual couplings or direct couplings or communication connections may be implemented through some interfaces. The indirect couplings or communication connections between the apparatuses or the units may be in electronic, mechanical, or other forms.

Units described as separate parts may or may not be physically separate, and parts displayed as units may or may not be physical units, to be specific, may be located in one place, or may be distributed on a plurality of network units. A part or all of the units may be selected based on an actual requirement to achieve the objectives of the solutions in embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of embodiments of this application essentially, or the part contributing to a conventional technology, or a part of the technical solutions may be embodied in a form of a software product. The computer software product is stored in a storage medium, and includes several instructions for instructing a computer device (which may be a personal computer, a server, a network device, or the like) to perform all or a part of steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but the protection scope of embodiments of this application is not limited thereto. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A power adjustment method, wherein the method is applied to a first communication apparatus side, the first communication apparatus manages a first cell, and the method comprises:
receiving first information, wherein the first information indicates a power parameter;
determining a first power and a second power based on the power parameter, wherein the second power is greater than the first power;
providing a service for a first terminal device in the first cell based on the first power; and
providing a service for a second terminal device in the first cell based on the second power.

2. The method according to claim 1, wherein the second power is less than or equal to a third power, and the third power is a power of the first cell before adjustment.

3. The method according to claim 1 or 2, wherein the method further comprises:
determining a first experience rate of the second terminal device, wherein the first experience rate corresponds to the second power; and
sending indication information of the first experience rate.

4. The method according to any one of claims 1 to 3, wherein the method further comprises:
determining a second experience rate of the first terminal device, wherein the second experience rate corresponds to the first power; and
sending indication information of the second experience rate.

5. The method according to any one of claims 2 to 4, wherein the power parameter comprises at least one of the following:
the first power, the second power, a first power adjustment amount, or a second power adjustment amount, wherein
a difference between the third power and the first power adjustment amount is the first power;
a difference between the third power and the second power adjustment amount is the second power; and
the second power adjustment amount is less than the first power adjustment amount.

6. The method according to any one of claims 1 to 5, wherein the method further comprises:
sending a first parameter, wherein the first parameter is used for determining the first information.

7. The method according to claim 6, wherein the first parameter comprises at least one of traffic information, load information, and channel quality indicator information.

8. The method according to any one of claims 1 to 7, wherein a difference between the second power and the first power is greater than or equal to a threshold.

9. A power adjustment method, wherein the method is applied to a second communication apparatus side, and the method comprises:
generating first information, wherein the first information indicates a power parameter, the power parameter is used for determining a first power and a second power, and the second power is greater than the first power; and
the first power corresponds to a first terminal device in a first cell, and the second power corresponds to a second terminal device in the first cell; and
sending the first information.

10. The method according to claim 9, wherein the second power is less than or equal to a third power, and the third power is a power of the first cell before adjustment.

11. The method according to claim 9 or 10, wherein the method further comprises:
receiving indication information of a first experience rate of the second terminal device, wherein the first experience rate corresponds to the second power.

12. The method according to any one of claims 9 to 11, wherein the method further comprises:
receiving indication information of a second experience rate of the first terminal device, wherein the second experience rate corresponds to the first power.

13. The method according to any one of claims 9 to 12, wherein the power parameter comprises at least one of the following:
the first power, the second power, a first power adjustment amount, or a second power adjustment amount, wherein
a difference between the third power and the first power adjustment amount is the first power;
a difference between the third power and the second power adjustment amount is the second power; and
the second power adjustment amount is less than the first power adjustment amount.

14. The method according to any one of claims 9 to 13, wherein the method further comprises:
receiving a first parameter; and
determining the first information based on the first parameter and a first model, wherein
the first model indicates a relationship between a power of the first cell and an experience rate in the first cell.

15. The method according to claim 14, wherein the determining the first information based on the first parameter and a first model comprises:
determining the first information based on the first parameter, the first model, and a second model, wherein
the second model indicates a relationship between a power of the second terminal device and an experience rate of the second terminal device.

16. The method according to claim 14 or 15, wherein the first parameter comprises at least one of traffic information, load information, and channel quality indicator information.

17. The method according to any one of claims 9 to 16, wherein a difference between the second power and the first power is greater than or equal to a threshold.

18. A communication apparatus, comprising a unit configured to implement the method according to any one of claims 1 to 17.

19. A communication apparatus, comprising a processor, wherein the processor is configured to: cause, by executing a computer program or instructions or by using a logic circuit, the communication apparatus to perform the method according to any one of claims 1 to 17.

20. The communication apparatus according to claim 19, wherein the communication apparatus further comprises a memory, and the memory is configured to store the computer program or the instructions.

21. The communication apparatus according to claim 19 or 20, wherein the communication apparatus further comprises a communication interface, and the communication interface is configured to input and/or output a signal.

22. A communication system, comprising a first communication apparatus and a second communication apparatus, wherein
the second communication apparatus is configured to: generate first information, wherein the first information indicates a power parameter;
the second communication apparatus is configured to: send the first information to the first communication apparatus;
the first communication apparatus is configured to: receive the first information from the second communication apparatus;
the first communication apparatus is configured to: determine a first power and a second power based on the power parameter, wherein the second power is greater than the first power; and
the first communication apparatus is configured to: provide a service for a first terminal device in a first cell based on the first power, and provide a service for a second terminal device in the first cell based on the second power, wherein
the first communication apparatus manages the first cell.

23. The system according to claim 22, wherein the first communication apparatus is further configured to perform the method according to any one of claims 2 to 8.

24. The system according to claim 22 or 23, wherein the second communication apparatus is further configured to perform the method according to any one of claims 9 to 17.

25. A communication apparatus, comprising a logic circuit and an input/output interface, wherein the input/output interface is configured to input and/or output a signal, and the logic circuit is configured to perform the method according to any one of claims 1 to 17.

26. A computer-readable storage medium, wherein the computer-readable storage medium stores a computer program or instructions; and when the computer program or the instructions are run on a computer, the method according to any one of claims 1 to 17 is caused to be performed.

27. A computer program product, comprising instructions, wherein when the instructions are run on a computer, the method according to any one of claims 1 to 17 is caused to be performed.
